# FASCICULE DE BREVET EUROPEEN

(11) **EP 3 155 232 B1**
(45) Date de publication et mention de la délivrance du brevet: **12.12.2018**
(21) Numéro de dépôt: 15733820.3
(22) Date de dépôt: 10.06.2015
(51) Int. Cl.: F01D 17/08, G05B 23/00, G05B 17/00

(54) **PROCÉDÉ D'AIDE Á LA DÉTECTION D'UNE DÉGRADATION D'UNE CANALISATION DE TURBOREACTEUR**
HILFSVERFAHREN ZUR ERKENNUNG VON SCHÄDEN AN EINEM TURBOJET-KANAL
METHOD FOR ASSISTING WITH THE DETECTION OF DAMAGE TO A TURBOJET DUCT

(30) Priorité: 12.06.2014 FR 1455357
(43) Date de publication de la demande: 19.04.2017
(73) Titulaire: SAFRAN AIRCRAFT ENGINES, 75015 Paris (FR)
(72) Inventeur: FOIRET, Guilhem Alcide Auguste, F-Paris 75012 (FR)
(74) Mandataire: Cabinet Camus Lebkiri
(86) Numéro de dépôt international: PCT/FR2015/051531
(87) Numéro de publication internationale: WO 2015/189521

(56) Documents cités:
- US-A1- 2007 089 499
- US-A1- 2007 118 270
- US-A1- 2011 046 863

## Description

### DOMAINE TECHNIQUE DE L'INVENTION

L'invention se rapporte au domaine général des turboréacteurs. Elle concerne plus particulièrement un procédé d'aide à la détection d'une dégradation d'une canalisation dans un turboréacteur.

### ARRIERE PLAN TECHNOLOGIQUE DE L'INVENTION

Dans un turboréacteur, de l'air entrant est comprimé dans un compresseur avant d'être mélangé à un carburant et brûlé dans une chambre à combustion. Les gaz chauds produits dans la chambre entraînent alors une ou plusieurs turbines aval, puis sont éjectés. Le turboréacteur comporte en outre un calculateur assurant des fonctions de régulation de puissance et de gestion électronique générale : le calculateur gère par exemple le débit carburant, l'état de butées, vannes de décharges ou encore systèmes de calages d'aubes directrices du turboréacteur.

Le compresseur est généralement séparé en deux parties : un compresseur basse pression (BP) suivi d'un compresseur haute pression (HP). En outre, chacun de ces deux compresseurs est généralement composé de plusieurs étages; le dernier étage du compresseur HP est l'étage directement suivi de la chambre de combustion. Le rôle du compresseur étant de comprimer l'air pour l'amener à des vitesse, pression et température optimales à l'entrée de la chambre de combustion, surveiller la pression statique au niveau de la sortie du dernier étage du compresseur HP est primordial. Cette mesure sert au contrôle du turboréacteur et du dosage carburant.

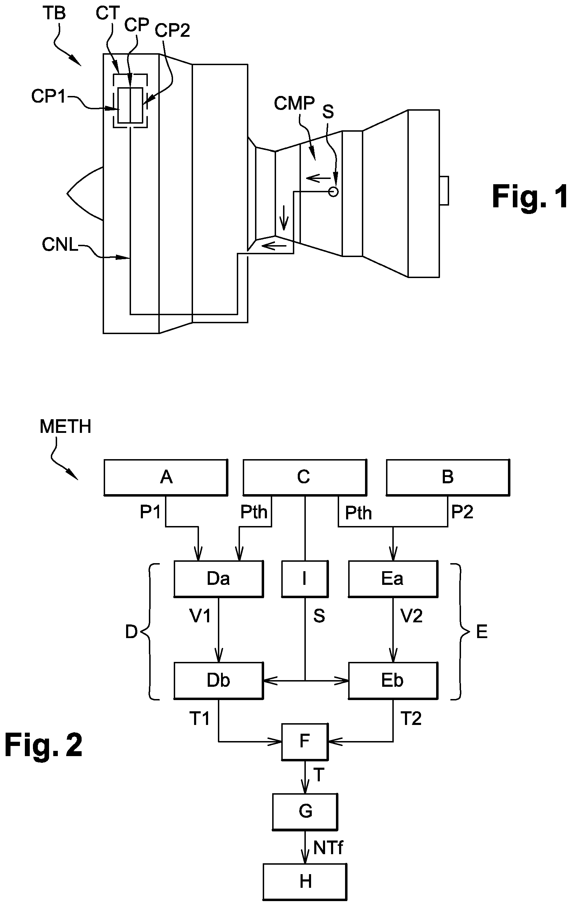

La figure 1 représente schématiquement un turboréacteur TB comprenant un dispositif de mesure de la pression statique au niveau de la sortie S du compresseur haute pression CMP. Pour alléger la description, cette pression est appelée PS3 dans la suite du texte.

Comme le montre la figure 1, le turboréacteur TB comporte notamment un calculateur CT et une canalisation CNL qui achemine l'air en sortie S du compresseur HP CMP jusqu'au calculateur CT. Au sein du calculateur CT, un bloc pression se charge de mesurer et convertir la pression de l'air acheminé via un capteur de pression CP. Cette information est alors utilisée pour le contrôle moteur et la détection de pannes.

Or l'expérience montre un nombre non négligeable d'incidents à cause d'une mesure de la pression PS3 erronée, par exemple une accélération plus lente que la normale, une perte de poussée ou une impossibilité à atteindre la poussée demandée. Ces incidents arrivent le plus souvent lorsque l'avion nécessite une forte poussée, c'est-à-dire au décollage, en phase de montée ou en approche, et peuvent conduire à un arrêt volontaire du turbomoteur par l'équipage.

Pour améliorer la fiabilité de la mesure, le capteur de pression CP est donc généralement redondé. Deux capteurs de pression CP1, CP2 mesurent alors la pression de l'air acheminé, et il est vérifié que l'écart entre les deux mesures n'est pas trop important. En cas de mesures divergentes, les deux valeurs sont comparées à une valeur de pression PS3 théorique déterminée selon un modèle implémenté dans le calculateur CT, ce qui permet de localiser le capteur de pression défaillant.

Cependant, si ce test est adapté pour déceler un dysfonctionnement d'un capteur, il ne permet pas de déceler un défaut sur la canalisation. En effet, un grand nombre de défauts au niveau de la canalisation peuvent être constatés, notamment :
- Une connexion lâche de la canalisation au niveau du calculateur, souvent après un lavage du turboréacteur au cours duquel la canalisation a été démontée
- Une présence de glace ou d'eau au niveau de la connexion de la canalisation au niveau du calculateur
- Une présence de glace ou d'eau au sein de la canalisation
- Des perforations de la canalisation, par exemple dus à un frottement récurrent avec des systèmes environnants.

Tous ces défauts sont à l'origine d'une sous-estimation de la pression PS3. Par exemple, une canalisation obstruée ou perforée engendre une perte de charge diminuant la pression vue par le capteur en aval du défaut. Or le débit de fuite est fonction de la pression statique au niveau de la sortie du compresseur HP, ainsi que de la surface de fuite. Plus la pression PS3 est élevée, ou plus la taille du défaut est grande, plus le débit d'air s'échappant est important. De plus, la perte de charge est fonction du débit de fuite. La perte de charge est donc d'autant plus grande que le défaut est prononcé et/ou que la pression PS3 est élevée.

Actuellement, la seule manière de détecter un défaut au niveau de la canalisation consiste en une inspection visuelle par un opérateur de maintenance, soit fortuitement au cours d'une opération de maintenance, soit volontairement suite à un incident (un arrêt volontaire ou non du turboréacteur en vol, une perte de poussée, un démarrage impossible, etc). Le document US2007/089499 décrit un procédé de détection d'un dysfonctionnement d'un capteur conçu pour mesurer la pression en sortie d'un compresseur haute pression. Ce procédé ne permet tout de même pas de détecter une dégradation de la canalisation.

### DESCRIPTION GENERALE DE L'INVENTION

L'invention offre une solution aux problèmes évoqués précédemment, en proposant un procédé d'aide à la détection d'une dégradation de la canalisation en question.

Selon un premier aspect, l'invention concerne donc un procédé pour aider à détecter une dégradation d'une canalisation, ladite canalisation étant conçue de sorte à acheminer un flux d'air pressurisé prélevé en sortie d'un compresseur haute pression d'une turbomachine jusqu'à un premier capteur de pression et un deuxième capteur de pression d'un calculateur.

Le procédé comporte les étapes suivantes :
- Etape A : Mesurer une première pression d'air au niveau du premier capteur de pression
- Etape B : Mesurer une deuxième pression d'air au niveau du deuxième capteur de pression
- Etape C : Déterminer une pression théorique du flux d'air en sortie du compresseur haute pression
- Etape D : Réaliser un premier test d'écart comprenant les sous-étapes suivantes :
   ▪ Calculer une première valeur égale à la différence entre la pression théorique et la première pression
   ▪ Comparer la première valeur à un seuil, le premier test d'écart étant positif si la première valeur est supérieure au seuil, négatif sinon
- Etape E : Réaliser un deuxième test d'écart comprenant les sous-étapes suivantes :
   ▪ Calculer une deuxième valeur égale à la différence entre la pression théorique et la deuxième pression
   ▪ Comparer la deuxième valeur au seuil, le deuxième test d'écart étant positif si la deuxième valeur est supérieure au seuil, négatif sinon
- Etape F : Réaliser un test final, positif si le premier test d'écart et le deuxième test d'écart sont positifs, négatif sinon.

En cas de test final positif, on peut supposer que la canalisation présente un défaut. En d'autres termes, un test final positif est un fort indice de présomption d'une dégradation de la canalisation. Une inspection visuelle peut ensuite permettre de confirmer que la canalisation est en effet dégradée.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Ainsi, dans un mode de réalisation non limitatif, l'étape A et l'étape B sont réalisées quasiment simultanément. On entend par là que les deux mesures de pression sont espacées temporellement au maximum d'une durée égale à la période du calculateur.

Dans un mode de réalisation, les étapes A, B, C, D, E et F sont réalisées à nouveau, par exemple périodiquement. Cela permet de confirmer que la canalisation présente un défaut.

Dans un mode de réalisation, la période de réalisation des étapes A, B, C, D, E et F est sensiblement égale à la période du calculateur. En d'autres termes, un test final est réalisé par période du calculateur. Cela permet une aide à la détection rapide d'un défaut sur la canalisation. Dans un autre mode de réalisation, les tests finaux sont plus espacés. Cela permet de diminuer les calculs au sein du calculateur.

Dans un mode de réalisation préféré, après N tests finaux successifs positifs réalisés, le procédé comporte une étape H de déclenchement d'une alarme, N étant un nombre entier positif. On estime qu'après N tests positifs, la canalisation présente bien un défaut.

Dans un mode de réalisation, le procédé comporte une étape I de réglage de la valeur seuil en fonction de la pression théorique du flux d'air. Le seuil est par exemple un pourcentage de la pression théorique. L'étape I est réalisée suite à l'étape C.

Dans un mode de réalisation préféré, la valeur seuil est réglée sur la valeur maximale entre 10 psi (livres par pouce carré) et 5% de la pression théorique du flux d'air.

Selon un deuxième aspect, l'invention concerne un programme d'ordinateur comprenant un ensemble d'instructions, qui lorsqu'elles sont exécutées par un calculateur, provoque la mise en oeuvre d'un procédé selon le premier aspect de l'invention.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention. Les figures montrent :
- A la figure 1, déjà décrite, une représentation schématique d'un turboréacteur comprenant un dispositif de mesure de la pression statique au niveau de la sortie du compresseur HP dudit turboréacteur
- A la figure 2, une représentation schématique d'un procédé selon un mode de réalisation de l'invention.

### DESCRIPTION DETAILLEE D'AU MOINS UN MODE DE REALISATION DE L'INVENTION

Le procédé proposé par l'invention est destiné à être mis en oeuvre au sein d'un turboréacteur TB tel que celui préalablement décrit à la figure 1. Le turboréacteur TB comporte ainsi un compresseur haute pression CMP, un calculateur CT et une canalisation CNL pour relier le calculateur CT à une sortie S du compresseur haute pression CMP.

Le calculateur CT comporte un premier capteur de pression CP1 et un deuxième capteur de pression CP2. La canalisation CNL est conçue de sorte à acheminer un flux d'air pressurisé prélevé en sortie S du compresseur haute pression CMP jusqu'au premier capteur de pression CP1 et au deuxième capteur de pression CP2.

Le procédé exploite l'idée qu'un défaut sur la canalisation CNL se répercute sur les mesures des deux capteurs de pression CP1, CP2, puisque la canalisation CNL est un élément commun de la chaîne de mesure de la pression PS3.

La figure 2 est une représentation schématique d'un procédé METH selon un mode de réalisation de l'invention. Le procédé METH comporte les étapes suivantes :
- Etape A : Mesurer une première pression d'air P1 au niveau du premier capteur de pression CP1.
- Etape B : Mesurer une deuxième pression d'air P2 au niveau du deuxième capteur de pression CP2. Les deux mesures de pression P1, P2 sont réalisées en temps réel et quasiment simultanément. Quasiment simultanément signifie que si le calculateur CT fonctionne à la fréquence f, alors les deux mesures de pression P1, P2 sont toutes deux réalisées pendant la période temporelle 1/f.
- Etape C : Déterminer (estimer) une pression théorique Pth du flux d'air en sortie S du compresseur haute pression CMP. Un modèle implémenté dans le calculateur CT permet de calculer en temps réel cette valeur théorique Pth. Le détail de l'implémentation de ce modèle fait partie de l'état de l'art et n'est donc pas détaillé ici. On note qu'en dehors du contexte du procédé selon l'invention, la valeur de la pression théorique Pth peut être utilisée pour détecter lorsqu'un des capteurs de pression CP1, CP2 est défaillant, de la manière expliquée dans la partie « Arrière-plan technologique de l'invention ».
- Etape I : Calculer une valeur seuil S en fonction de la pression théorique Pth du flux d'air. Idéalement, pour des turboréacteurs de type CFM56-7B, le seuil est réglé de manière à être sensiblement égal à la valeur maximale entre 10 psi (pound per square inch), soit environ 0,7 bar, et 5% de la valeur théorique Pth. Ainsi, si la pression théorique Pth vaut 30 psi, alors la valeur seuil S vaut 10 psi. Si la pression théorique Pth vaut 300 psi, alors la valeur seuil S vaut 15 psi.
- Etape D : Réaliser un premier test d'écart T1 comprenant les sous-étapes suivantes :
   - Sous-étape Da : Calculer une première valeur V1 égale à la différence entre la pression théorique Pth et la première pression P1
   - Sous-étape Db : Comparer la première valeur V1 à un seuil S, le premier test d'écart T1 étant positif si la première valeur V1 est supérieure au seuil S, négatif sinon.
- Etape E : Réaliser un deuxième test d'écart T2 comprenant les sous-étapes suivantes :
   - Sous-étape Ea : Calculer une deuxième valeur V2 égale à la différence entre la pression théorique Pth et la deuxième pression P2
   - Sous-étape Eb : Comparer la deuxième valeur V2 au seuil S, le deuxième test d'écart T2 étant positif si la deuxième valeur V2 est supérieure au seuil S, négatif sinon.
- Etape F : Réaliser un test final Tf, positif si le premier test d'écart T1 et le deuxième test d'écart T2 sont positifs, négatif sinon.
- Etape G : Les étapes A à F sont alors réalisées à nouveau, par exemple jusqu'à réception d'une commande d'arrêt du procédé, ou pendant une durée déterminée, ou un nombre de fois déterminé. Les étapes A à F sont avantageusement réalisées périodiquement, idéalement à une fréquence f équivalente à la fréquence du calculateur CT.
- Etape H : Après N tests finaux Tf successifs positifs, déclencher une alarme, N étant un nombre entier positif. Traditionnellement, une alarme est déclenchée si les tests finaux Tf sont donnés positifs pendant 4,8 secondes. Si les tests finaux Tf sont réalisés à une fréquence de 15 millisecondes (qui est généralement l'ordre de grandeur de la fréquence d'un calculateur), alors une alarme est déclenchée après N=320 occurrences de tests finaux Tf positif. Toutefois, pour des raisons de capacité du calculateur CT embarqué dans le turbomoteur TB, il peut être souhaitable de diminuer la fréquence des occurrences, et ainsi soulager le calculateur CT. Par exemple, si les tests finaux Tf sont réalisés à une fréquence de 120 millisecondes, alors une alarme est déclenchée après N=40 occurrences de tests finaux Tf positif. On note que la panne recherchée étant physique (il s'agit par exemple d'une fuite dans la canalisation) et non électrique, la fréquence d'acquisition peut être moins élevée sans pour autant diminuer la fiabilité du procédé METH.

Le déclenchement de l'alarme consiste en l'envoi d'une information de panne depuis le calculateur CT vers un système de maintenance. Le système de maintenance décide alors, selon la gravité de la panne, de l'afficher ou non au cockpit. La mesure de la pression PS3 étant essentielle au contrôle du turbomoteur TB, la panne est signalée dans le cockpit sous la forme d'une alarme orange, indiquant un problème au niveau du système de régulation du turbomoteur TB.

Ainsi, selon le procédé METH décrit, si des tests finaux Tf sont donnés positifs simultanément sur les deux voies locales correspondant aux deux mesures de pression, et ce pendant une durée déterminée, une panne « Détérioration canalisation PS3 » est levée.

On note que :
- Lorsque la turbomachine TB est à l'arrêt, un défaut sur la canalisation CNL n'est pas détectable par le procédé METH car la pression PS3 est égale à la pression ambiante.
- Une fois le turbomoteur TB démarré, la perte de charge causée par une détérioration sur la canalisation CNL sera plus ou moins visible selon la poussée du turbomoteur :
   - Au ralenti au sol, la poussée est minimale, en conséquence la pression PS3 l'est également. Selon l'importance de la détérioration, la perte de charge peut être faible, et ainsi moins facilement détectable.
   - Plus la poussée demandée est importante, plus la perte de charge est grande et le défaut détectable.

On note également que la plus petite perte de charge décelable est directement reliée à la précision du modèle de calcul de la pression théorique Pth, ainsi qu'à la précision de la chaîne d'acquisition des pressions P1, P2. Typiquement, cette précision est fonction des pressions P1, P2 mesurées, la précision se dégradant avec l'augmentation de pression. La valeur seuil S peut donc être réglée d'autant plus bas que les précisions du modèle et des mesures sont bonnes.

## Revendications

1. Procédé (METH) d'aide à la détection d'une dégradation d'une canalisation (CNL), ladite canalisation (CNL) étant conçue de sorte à acheminer un flux d'air pressurisé prélevé en sortie (S) d'un compresseur haute pression (CMP) d'une turbomachine (TB) jusqu'à un premier capteur de pression (CP1) et un deuxième capteur de pression (CP2) d'un calculateur (CT), le procédé (METH) comportant les étapes suivantes :
• (A) Mesurer une première pression d'air (P1) au niveau du premier capteur de pression (CP1)
• (B) Mesurer une deuxième pression d'air (P2) au niveau du deuxième capteur de pression (CP2)
• (C) Déterminer une pression théorique (Pth) du flux d'air en sortie (S) du compresseur haute pression (CMP)
• (D) Réaliser un premier test d'écart (T1) comprenant les sous-étapes suivantes :
▪ (Da) Calculer une première valeur (V1) égale à la différence entre la pression théorique (Pth) et la première pression (P1)
▪ (Db) Comparer la première valeur (V1) à un seuil (S), le premier test d'écart (T1) étant positif si la première valeur (V1) est supérieure au seuil (S), négatif sinon
• (E) Réaliser un deuxième test d'écart (T2) comprenant les sous-étapes suivantes :
▪ Calculer une deuxième valeur (V2) égale à la différence entre la pression théorique (Pth) et la deuxième pression (P2)
▪ Comparer la deuxième valeur (V2) au seuil (S), le deuxième test d'écart (T2) étant positif si la deuxième valeur (V2) est supérieure au seuil (S), négatif sinon
• (F) Réaliser un test final (Tf), positif si le premier test d'écart (T1) et le deuxième test d'écart (T2) sont positifs, négatif sinon.

2. Procédé (METH) selon la revendication précédente, **caractérisé en ce que** l'étape (A) de mesure de la première pression (P1) et l'étape (B) de mesure de la deuxième pression (P2) sont réalisées quasiment simultanément.

3. Procédé (METH) selon l'une des revendications précédentes, **caractérisé en ce que** les étapes (A) à (F) sont réalisées périodiquement.

4. Procédé (METH) selon la revendication précédente, **caractérisé en ce que** la période d'occurrence des étapes (A) à (F) est sensiblement égale à la période du calculateur (CT).

5. Procédé (METH) selon l'une des revendications 3 ou 4, **caractérisé en ce qu'**après N tests finaux (Tf) successifs positifs réalisés, le procédé (METH) comporte une étape (H) de déclenchement d'une alarme, N étant un nombre entier positif.

6. Procédé (METH) selon l'une des revendications précédentes, **caractérisé en ce qu'**il comporte une étape (I) de réglage du seuil (S) en fonction de la pression théorique (Pth) du flux d'air déterminée.

7. Procédé (METH) selon la revendication précédente, **caractérisé en ce que** le seuil (S) est réglé sur la valeur maximale entre 10 psi (livres par pouce carré) et 5% de la pression théorique (Pth).

8. Programme d'ordinateur comprenant un ensemble d'instructions, qui lorsqu'elles sont exécutées par un calculateur (CT), provoque la mise en oeuvre d'un procédé (METH) selon l'une des revendications 1 à 7.

## Patentansprüche

1. Verfahren (METH) zur Unterstützung der Detektion einer Beschädigung einer Kanalisation (CNL), wobei die genannte Kanalisation (CNL) derart ausgelegt ist, dass sie einen Druckluftstrom, der am Ausgang (S) eines Hochdruckkompressors (CMP) einer Turbomaschine (TB) entnommen wurde, bis zu einem ersten Drucksensor (CP1) und einem zweiten Drucksensor (CP2) eines Rechners (CT) verbringt, wobei das Verfahren (METH) die folgenden Schritte umfasst:
• (A) Messen eines ersten Luftdrucks (P1) an dem ersten Drucksensor (CP1);
• Messen eines zweiten Luftdrucks (P2) an dem zweiten Drucksensor (CP2)
• (C) Bestimmen eines theoretischen Drucks (Pth) des Luftstroms am Ausgang (S) des Hochdruckkompressors (CMP)
• (D) Realisieren eines ersten Abweichungstests (T1), umfassend die folgenden Teilschritte:
∘ (Da) Berechnen eines ersten Wertes (V1) gleich der Differenz zwischen dem theoretischen Druck (Pth) und dem ersten Druck (P1)
∘ (Db) Vergleichen des ersten Wertes (V1) mit einem Schwellenwert (S), wobei der erste Abweichungstest (T1) positiv ist, wenn der erste Wert (V1) höher ist als der Schwellenwert (S), andernfalls negativ;
• (E) Realisieren eines zweiten Abweichungswertes (T2), umfassend die folgenden Teilschritte:
∘ Berechnen eines zweiten Wertes (V2) gleich der Differenz zwischen dem theoretischen Druck (Pth) und dem zweiten Druck (P2)
∘ Vergleichen des zweiten Wertes (V2) mit dem Schwellenwert (S), wobei der zweite Abweichungstest (T2) positiv ist, wenn der zweite Wert (V2) höher ist als der Schwellenwert (S), andernfalls negativ
• Realisieren eines finalen Tests (Tf), der positiv ist, wenn der erste Abweichungstest (T1) und der zweite Abweichungstest (T2) positiv sind, andernfalls negativ.

2. Verfahren (METH) gemäß dem voranstehenden Anspruch, **dadurch gekennzeichnet, dass** der Messschritt (A) des ersten Drucks (P1) und der Messschritt (B) des zweiten Drucks (P2) praktisch gleichzeitig realisiert sind.

3. Verfahren (METH) gemäß einem der voranstehenden Ansprüche, **dadurch gekennzeichnet, dass** die Schritte (A) bis (F) periodisch realisiert sind.

4. Verfahren (METH) gemäß dem voranstehenden Anspruch, **dadurch gekennzeichnet, dass** die Periode des Auftretens der Schritte (A) bis (F) deutlich gleich der Periode des Rechners (CT) ist.

5. Verfahren (METH) gemäß einem der Ansprüche 3 oder 4, **dadurch gekennzeichnet, dass** nach N realisierten positiven sukzessiven finalen Tests (Tf) das Verfahren (METH) einen Auslöseschritt (H) eines Alarms umfasst, wobei N eine ganze positive Zahl ist.

6. Verfahren (METH) gemäß einem der voranstehenden Ansprüche, **dadurch gekennzeichnet, dass** es einen Einstellschritt (I) des Schwellenwertes (S) in Abhängigkeit von dem theoretischen Druck (Pth) des bestimmten Luftdrucks umfasst.

7. Verfahren (METH) gemäß dem voranstehenden Anspruch, **dadurch gekennzeichnet, dass** der Schwellenwert (S) auf den maximalen Wert zwischen 10 psi (Pfund pro Quadratzoll) und 5 % des theoretischen Drucks (Pth) eingestellt ist.

8. Computerprogramm, umfassend einen Anweisungssatz, der, wenn sie durch einen Rechner (CT) ausgeführt sind, es die Umsetzung eines Verfahrens (METH) gemäß einem der Ansprüche 1 bis 7 hervorruft.

## Claims

1. Method (METH) for assisting with the detection of damage to a duct (CNL), said duct (CNL) being designed such as to convey a pressurised air flow collected at the outlet (S) of a high pressure compressor (CMP) of a turbine engine (TB) to a first pressure sensor (CP1) and a second pressure sensor (CP2) of a computer (CT), the method (METH) comprising the following steps:
• (A) Measure a first air pressure (P1) at the first pressure sensor (CP1)
• (B) Measure a second air pressure (P2) at the second pressure sensor (CP2)
• (C) Determine a theoretical air flow pressure (Pth) at the outlet (S) of the high pressure compressor (CMP)
• (D) Make a first difference test (T1) including the following sub-steps:
▪ (Da) Calculate a first value (V1) equal to the difference between the theoretical pressure (Pth) and the first pressure (P1)
▪ Compare the first value (V1) with a threshold (S), the first difference test (T1) being positive if the first value (V1) is higher than the threshold (S), otherwise negative
• (E) Make a second difference test (T2) including the following sub-steps:
▪ Calculate a second value (V2) equal to the difference between the theoretical pressure (Pth) and the second pressure (P2)
▪ Compare the second value (V2) with the threshold (S), the second difference test (T2) being positive if the second value (V2) is higher than the threshold (S), otherwise negative
• (F) Perform a final test (Tf), which is positive if the first difference test (T1) and the second difference test (T2) are positive, and negative otherwise.

2. Method (METH) according to the previous claim, **characterised in that** the step (A) to measure the first pressure (P1) and step (B) to measure the second pressure (P2), are done practically simultaneously.

3. Method (METH) according to one of the previous claims, **characterised in that** steps (A) to (F) are done periodically.

4. Method (METH) according to the previous claim, **characterised in that** the occurrence period of steps (A) to (F) is approximately equal to the period of the computer (CT).

5. Method (METH) according to either claim 3 or 4, **characterised in that** the method (METH) includes a step (H) to trigger an alarm after N successive positive final tests (Tf) are performed, where N is a positive integer number.

6. Method (METH) according to any one of the previous claims, **characterised in that** it includes a step (I) to adjust the threshold (S) as a function of the determined theoretical air flow pressure (Pth).

7. Method (METH) according to the previous claim, **characterised in that** the threshold (S) is adjusted to the maximum value between 10 psi (pounds per square inch) and 5% of the theoretical air flow pressure.

8. Computer program comprising an instruction set that, when executed on a computer (CT), causes implementation of a method (METH) according to one of claims 1 to 7.
